Europäisches Patentamt

European Patent Office

Office européen des brevets

(19)

(11) Numéro de publication: **0 209 459**
**B1**

(12) **FASCICULE DE BREVET EUROPEEN**

(45) Date de publication du fascicule du brevet: **11.04.90**

(51) Int. Cl.⁵: **G 06 F 3/023**

(21) Numéro de dépôt: **86401555.7**

(22) Date de dépôt: **11.07.86**

(54) Procédé et système de surveillance d'une installation industrielle.

(30) Priorité: **16.07.85 FR 8510869**

(43) Date de publication de la demande:
**21.01.87 Bulletin 87/04**

(45) Mention de la délivrance du brevet:
**11.04.90 Bulletin 90/15**

(84) Etats contractants désignés:
**AT BE CH DE FR GB IT LI LU NL SE**

(56) Documents cités:
**EP-A-0 128 123**
**DE-A-2 338 773**
**FR-A-1 284 627**

(73) Titulaire: **Wanner, Jean-Claude**
**La Grèze Laussou**
**F-47150 Monflanquin (FR)**

(72) Inventeur: **Wanner, Jean-Claude**
**La Grèze Laussou**
**F-47150 Monflanquin (FR)**

(74) Mandataire: **Martin, Jean-Jacques et al**
**Cabinet REGIMBEAU 26, Avenue Kléber**
**F-75116 Paris (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

## Description

La présente invention est relative à un procédé et un système de surveillance et de gestion d'une installation industrielle comportant une pluralité de postes capables d'occuper chacun au moins deux états fonctionnels distincts et au système de surveillance et de gestion correspondant.

Les installations industrielles actuelles atteignant un degré de complexité très important du fait du nombre et de la diversité des postes fonctionnels et/ou des materiels les constituant, les problèmes de disfonctionnement de ces installations, dûs pour l'essentiel à des erreurs d'identification de ces matériels au cours d'opération de maintenance ou d'exploitation normale de ces installations par les personnels chargés d'effectuer les manoeuvres correspondantes, présentent une importance dont l'acuité est croissante et dont les conséquences dommageables peuvent se manifester par un disfonctionnement de l'installation, sont arrêt temporaire partiel ou total et, dans les cas les plus graves, un risque de danger difficilement contrôlable pour les personnels à pied d'oeuvre sur le site de l'installation ou même pour les populations des zones urbaines voisines de celle-ci.

Ce type d'erreur se caractérise dans la plupart des cas par le fait que l'opérateur chargé d'effectuer les manoeuvre de changement d'état fonctionnel d'un organe de l'installation (ouverture d'une vanne par exemple) effectue en fait cette opération sur un autre organe que celui qui a été désigné, en général sur un organe dont le code de désignation est très voisin (vanne RCP230VP au lieu de vanne RCV230VP) ou même sur un organe de fonction identique, dont le code de désignation est donc correct, mais appartenant à une tranche voisine.

Afin de réduire au maximum la probabilité d'incidents de ce type, il apparaît nécessaire

a) de réduire ou supprimer le risque de transmission d'ordre d'intervention erronée entre la personne responsable de la conduite des opérations d'intervention et la personne chargée d'exécuter ces interventions,

b) de réduire ou supprimer le risque de confusion, par cette dernière relativement à la localisation de l'organe de l'installation sur lequel l'opération doit être exécutée,

c) de permettre à la personne responsable de vérifier qu'aucune confusion ne s'est produite et que c'est bien l'ordre donné qui a été exécuté. Actuellement, et dans le majorité des cas, le choix des opérations à effectuer, par la personne responsable, est réalisé par lecture des plans de l'installation exécutés sur support papier, ces plans ne comportant le plus souvent que des renseignements sommaires relativement à l'état fonctionnel réel du système ou de l'installation. La mauvaise connaissance de l'état fonctionnel réel du système peut conduire à des décision, très dangereuses de la part de personnes responsables en particulier dans le cas où l'installation est une installation du type centrale nucléaire ou une installation de traitement de produits hautement toxiques.

La désignation des matériels sur lesquels les opérations doivent être exécutées et la transmission des ordres correspondants peuvent être réalisés soit oralement, soit par écrit. La transmission d'ordres d'exécution par écrit ne réduit pas de manière significative la probabilité d'erreur de transmission de l'ordre correspondant. Tout au plus permet-elle d'identifier l'auteur de cette erreur une fois que celle-qui a été commise puis détectée. Ensuite, l'exécution de l'ordre transmis, à supposer que cette transmission a été correctement exécutée, reste soumise à l'interprétation de cet ordre par la personne chargée de l'exécution. Cette interprétation ne peut être exécutée qu'en fonction de la connaissance réelle des lieux par l'exécutant, la disposition topologique réelle de l'installation étant fondamentalement différente des schémas ou plans correspondants et le code de désignation ou d'identification de l'organe considéré n'étant pas normalement de nature à constituer un moyen de repérage de la localisation de celui-ci.

L'exécutant, se fiant à la mémoire des lieux, se fie à celle-ci et à sa connaissance mentale des positions et formes de l'organe supposé, une vérification des codes correspondants n'étant pas effectuée ou effectuée de manière erronée.

Bien entendu, dans le cas où une série d'opérations doivent être exécutées selon une séquence temporelle déterminée, que ce soit sur un seul organe ou sur une pluralité de ceux-ci, l'exécution selon un ordre ou séquence différent ou une exécution partielle de celle-ci, conduit à un risque accru de mise en état très différent du système et ou de l'installation par rapport à l'état programmé attendu.

Enfin, l'absence de retour d'information relative aux opérations effectivement réalisées auprès de la personne responsable de la conduite des opérations, il est tout à fait exceptionnel que l'exécutant soit à même de détecter l'erreur résultante se manifestant au niveau de la seule exécution puis de procéder à la correction convenable sauf dans des cas très limités, a pour conséquence une détection tardive d'erreur et une localisation encore plus tardive de l'organe sur lequel l'opération erronée a été effectuée.

La présente invention a pour but de remédier aux inconvénients précités par la mise en oeuvre d'un procédé et d'un dispositif permettant tout au long de la chaîne constituée par la définition, la transmission, l'exécution de l'opération à exécuter de réduire notablement et même rendre négligeable probabilité d'erreur d'exécution réelle de l'opération souhaitée.

Un autre objet de la présente invention est la mise en oeuvre d'un procédé et d'un système de gestion d'une installation industrielle de type complexe dans lesquels l'impondérable, dû à l'intervention humaine, est réduit au minimum bien que le procédé et le dispositif de l'invention ne nécessite par d'installations de télésurveillance ou d'asservissement à distance supplémentaires, onéreuses et complexes.

Un autre objet de la présente invention est enfin la mise enoeuvre d'un procédé et d'un système de gestion d'une installation industrielle évolutif et flexible aisément modifiable en relation avec les modifications structurelles, architecturales et/ou fonctionnelles de l'installation lors de la modernisation de celle-ci.

Le procédé de surveillance et de gestion d'une installation industrielle comportant une pluralité de postes (Pi) capables d'occuper chacun au moins deux états fonctionnels distincts dans lequel la surveillance est normalement effectuée par un opérateur susceptible après contrôle de l'état fonctionnel de chacun des postes (Pi) d'assurer le changement d'état fonctionnel dudit poste est remarquable en ce qu'il consiste à attribuer à chaque poste (Pi) une référence d'identification codée, à définir, préalablement à toute opération sur les postes (Pi), au niveau d'une centrale de contrôle et de gestion, une succession temporelle des interventions sur chacun des postes par l'opérateur pour établir une séquence de surveillance/gestion correspondante dite de référence, chaque intervention et la référence d'identification du poste (Pi) correspondant constituant une étape, à mémoriser au niveau d'un système témoin de surveillance ladite séquence relative à chaque poste (Pi), l'identification d'un poste (Pi) sur laquelle une opération doit être effectuée étant actualisée et/ou affichée en clair au niveau du témoin, à effectuer une comparaison entre l'information d'identification codée attribuée au poste Pi considéré avec l'information mémorisée au niveau du témoin de surveillance pour établir, à partir dudit témoin de surveillance un ordre de réalisation ou validation d'opération, ladite validation étant acquise, à mémoriser l'étape de séquence effectuée et à actualiser et/ou à afficher sur le témoin l'information d'identification du poste suivant (Pi+1) sur lequel une opération de surveillance/gestion doit être effectuée, à répéter les deux étapes précédentes pour l'ensemble des postes (Pi) selon ladite séquence.

Le système de surveillance et de gestion d'une installation industrielle comportant une pluralité de postes (Pi) conformément au procédé de l'invention est remarquable en ce qu'il comporte des moyens d'identification de chacune des postes (Pi) mettant en oeuvre une référence d'identification exprimée en code et/au en clair, une centrale de contrôle et de gestion permettant de définir, à partir des références d'identification de chacun des postes (Pi) et préalablement à toute opération sur lesdits postes, une succession temporelle des interventions sur chacun des postes par l'opérateur pour établir une séquence de surveillance/gestion correspondante dite de référence, chaque intervention et la référence d'identification du poste (Pi) correspondant constituant une étape de ladite séquence, un système témoin susceptible de mémoriser ladite séquence de référence et d'effectuer une lecture/mémorisation séquentielle de ladite référence d'identification codée de chacun des postes (Pi), ledit système témoin après lecture mémorisation de ladite référence d'un poste (Pi) étant adaptée à engendrer un order de validation pour l'opérateur puis à actualiser ou afficher sur le système témoin l'information d'identification (Pi+1) sur lequel une opération de surveillance gestion doit être effectuée, ledit système témoin étant en outre adapté à mémoriser l'ensemble des lectures de chacun des postes (Pi) pour constituer une séquence d'étapes réellement effectuées et la centrale de contrôle et de gestion étant susceptible d'effectuer une comparaison entre la séquence de référence et la séquence d'étapes effectuées.

Le dispositif et le procédé objet de l'invention trouvent application à la surveillance et à la gestion d'installations industrielles de tout type telles que les centrales nucléaires de production d'énergie électrique, les raffineries de matériau brut, les aciéries ou analogues.

Elle sera mieux comprise à la lecture de la description et à l'observation des dessins ci-après dans lesquels:

—les figures 1a et 1b représentent une illustration du procédé de l'invention,

—la figure 2 représente une vue d'une installation industrielle et d'un mode de réalisation particulier du système permettant la surveillance et la gestion de cette installation industrielle conformément au procédé de l'invention,

—la figure 3a représente un détail de réalisation préférentiel d'un élément constitutif du système selon l'invention et la figure 3b représente un schéma électrique de l'élément représenté en figure 3a,

—la figure 4a représente un détail de réalisation préférentiel d'un autre élément constitutif du système de l'invention, complémentaire de l'élément représenté en figure 3a, et la figure 4b représente un schéma électrique de l'élément représente en figure 4a,

—la figure 5 représente un détail de réalisation préférentiel des moyens d'identification de chacun des postes ou organes de l'installation industrielle à surveiller,

—la figure 6 représente un organigramme complet représentatif du fonctionnement du système conformément au procédé de l'invention, les deux sous figures 6a, 6b constituant ensemble la figure 6.

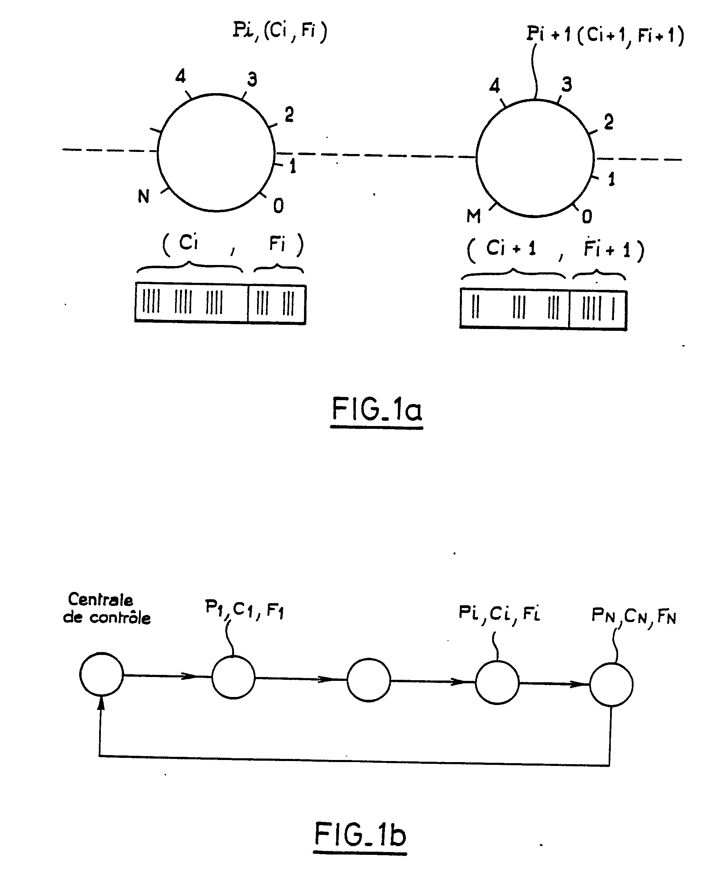

Le procédé objet de l'invention sera tout d'abord illustré en liaison avec la description des figures 1a et 1b.

L'installation industrielle soumise au procédé de surveillance et de gestion conformément à l'invention comporte une pluralité de postes notés Pi, Pi+1 sur la figure 1a et capables d'occuper chacun au moins deux états fonctionnels distincts. Sur cette même figure 1a, les états fonctionnels des postes Pi, Pi+1 sont représentés de manière schématique par des graduations notées respectivement de O à N et de O à M et correspondant par exemple à une position de réglage particulière définissant un état fonctionnel correspondant pour le poste $P_i$, $P_i+1$ considéré. La surveillance de chacun des postes $P_i$, $P_i+1$ est normalement effectuée par un opérateur ou exécutant susceptible après contrôle de l'état fonctionnel du poste $P_i$ d'assurer le changement d'état de celui-ci.

Conformément à l'invention, chacun des postes $P_i$ est caractérisé par une référence d'identification codée notée respectivement pour le poste $P_i$, $P_i+1$ par les symboles $C_i$, $C_i+1$. Outre une référence d'identification attribuée à chacun des postes $P_i$, une information d'état fonctionnel notée respectivement $F_i$, $F_i+1$ dans le cas des postes $P_i$, $P_i+1$ est également attribuée à chacun des postes précités. Ainsi, ainsi que représenté en figure 1a, chacun des postes $P_i$ est défini du point de vue de l'information le caractérisant par sa référence d'identification $C_i$ à laquelle est associée l'information de son état fonctionnel $F_i$.

Préalablement à toute opération ou intervention sur les postes $P_i$, une succession temporelle de ces interventions sur chacun des postes par l'opérateur est définie pour établir une séquence de surveillance/gestion correspondante de l'installation à surveiller dite séquence de référence. Chaque intervention et la référence d'identification du poste $P_i$ correspondant constituent une étape, laquelle est définie par la référence d'identification $C_i$ du poste $P_i$ ou organe sur lequel l'intervention doit être effectuée par l'opérateur ou l'exécutant. Cette séquence de référence relative à la succession de chacun des postes $P_i$ concernés est alors mémorisée au niveau d'un système témoin de surveillance. L'identification d'un poste $P_i$ sur laquelle une opération ou intervention doit être effectuée étant actualisée et/ou affichée en clair au niveau du témoin, une comparaison entre l'information d'identification codée, attribuée au poste $P_i$ considéré, avec l'information mémorisée sous forme de séquence de référence au niveau de témoin de surveillance est effectuée pour établir à partir du témoin de surveillance un ordre de réalisation ou validation d'opération interprétable par l'opérateur exécutant. La validation précédente étant acquise, l'étape de séquence effectivement réalisée, par l'opérateur exécutant, est mémorisée au niveau dudit témoin de surveillance. L'information d'identification du poste suivant $P_i+1$ sur lequel une opération du surveillance/gestion doit être effectuée est alors actualisée et/ou affichée sur le témoin de manière interprétable par l'opérateur exécutant. Les étapes précédentes relatives à l'identification d'un poste $P_i$ conduisant à la comparaison entre l'information d'identification codée attribuée au poste $P_i$ considéré avec l'information mémorisée au niveau du témoin de surveillance et l'étape de mémorisation de l'étape de séquence réellement effectuée conduisant à l'actualisation et/ou à l'affichage sur le témoin de surveillance de l'information d'identification du poste suivant $P_i+1$ sur lequel une opération ou intervention doit être effectuée sont bien entendu répétées pour l'ensemble des postes $P_i$ conformément à la sequence de référence.

Ainsi qu'il est en outre représenté en figure 1b de manière avantageuse, une comparaison entre la suite d'étapes ou séquences effectivement réalisée par l'opérateur exécutant, mémorisée au niveau du témoin de surveillance, et la séquence de référence est effectuée pour contrôle au niveau d'une centrale de contrôle et de gestion du procédé de l'invention lorsque l'opération de surveillance a été effectuée sur le dernier poste $P_i$ considéré à surveiller. Sur la figure 1b, le dernier poste sur lequel une opération a été effectuée et notée $P_N$, ce poste étant caractérisé par ses paramètres d'identification et paramètres fonctionnels notés $C_N$, $F_N$ et la comparaison au niveau de la centrale de contrôle de gestion est illustrée par la flèche de retour. La séquence de référence est illustrée par le passage successif du témoin de surveillance au niveau des postes notés $P_1$, $P_I$ et leurs paramètres d'identification respectifs $C_i$, $F_i$.

De manière préférentielle mais non limitative, dans le procédé objet de l'invention dans le cas où l'opérateur exécutant est un individu, les références d'identification codées $C_i$ et d'information d'état fonctionnel $F_i$ attribuées à chacun des postes $P_i$ sont géographiquement localisées au niveau de chacun de ces derniers. Les informations précitées relatives à chaque poste sont codées par exemple sous forme de code barre et le système témoin de surveillance est constitué par un système du type crayon optique muni d'un système d'affichage. Par système du type crayon optique, on entend tout système capable d'effectuer une lecture des informations codées d'identification $C_i$ et d'état fonctionnel $F_i$ et une mémorisation de ces informations codées. De préférence, lesdites informations sont codées selon un code du type code 39, c'est-à-dire selon un code à barre de type alphanumérique. Ce code, a déjà fait l'objet d'applications industrielles pour la désignation et l'identification de produits et une définition de celui-ci n'apparaît par nécessaire car apparaissant normalement connu dans la technique du codage. L'utilisation dans le procédé objet de l'invention d'un tel système de codage et d'un système témoin du type crayon optique précédemment décrit par l'individu opérateur-exécutant est d'une très grande facilité d'emploi et d'une très grande sécurité. En outre, le procédé de l'invention apparaît parfaitement flexible et modifiable du point de vue de son application en cas d'extension importante ou modification de l'installation industrielle à surveiller. En effet, ces modifications se traduisent pour l'essentiel en la seule augmentation de références d'identification codée et d'informations d'état fonctionnel correspondant à l'augmentation éventuelle de postes pourvu que les capacités de mémorisation du système témoin de surveillance et de la centrale de contrôle soient prévues à cet effet.

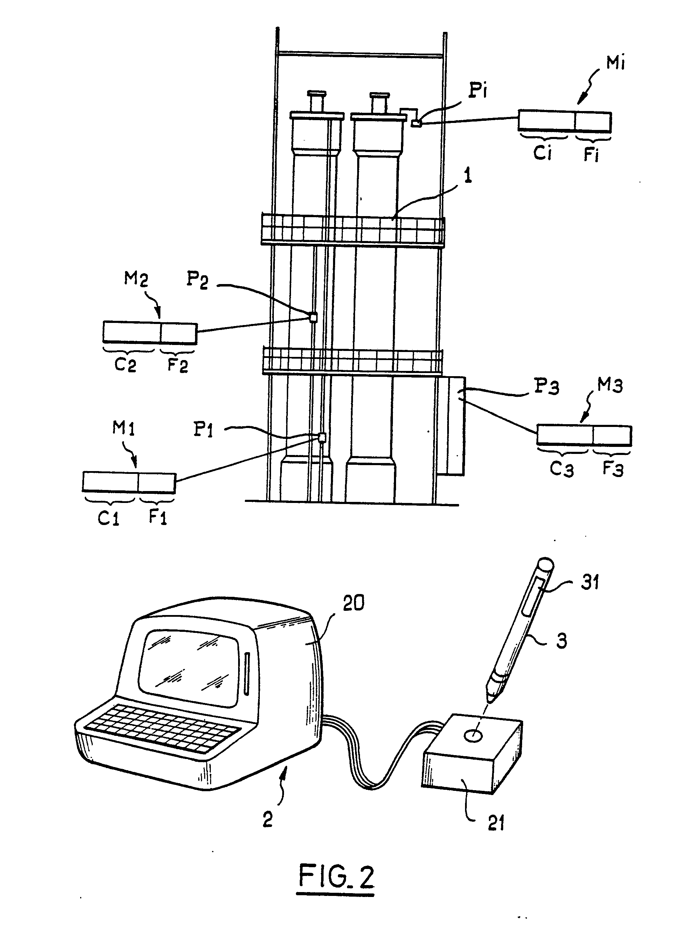

Le dispositif du système de surveillance et de gestion d'une installation industrielle conformément au procédé de l'invention sera maintenant décrit de manière plus détaillée en liaison avec la figure 2.

Sur cette figure, on a représenté en 1 schématiquement une installation industrielle d'un type donné dans laquelle différents moyens d'identification de chacun des postes Pi sont représentés. Ces moyens d'identification sont respectivement référencés $M_i$ pour chacun des postes Pi et mettent en oeuvre une référence d'identification exprimée en code et/ou en clair. Bien entendu, l'identification exprimée en clair est utile dans le cas ou les interventions sont effectuées par un individu opérateur-exécutant et les informations relatives à l'état fonctionnel de chaque poste Pi peuvent dans ce cas être également affichées en clair.

Une centrale de contrôle et de gestion est représentée en 2 et permet de définir à partir des références d'identification de chacun des postes Pi et de leur état fonctionnel, préalablement à toute opération sur les postes, une succession temporelle des interventions à exécuter pour établir la séquence de surveillance/gestion correspondante dite séquence de référence. Chaque intervention et la référence d'identification du poste correspondant, ainsi que son état fonctionnel constitue une étape de cette séquence. Sur la figure 2, la centrale de contrôle et de gestion est de préférence constituée par un micro-ordinateur 20 muni de ses périphériques. Par périphérique, on entend par exemple de manière classique une mémoire permanente de masse constituée sous forme de disque magnétique, un moniteur de visualisation du type moniteur TV, un clavier ou analogues.

En outre, un système témoin référencé en 3 est susceptible de mémoriser la séquence de référence et d'effectuer une lecture/mémorisation séquentielle de la séquence de référence d'identification codée de chacun des poste Pi. Le système témoin 3 après lecture mémorisation de la référence d'un poste Pi est apte à engendrer un ordre de validation d'exécution d'intervention pour l'opérateur exécutant puis à actualiser ou afficher sur le système témoin 3 l'information d'identification du poste suivant Pi+1 sur lequel une opération de surveillance/gestion doit être effectuée. Le système témoin 3 est en outre adaptée à mémoriser l'ensemble des lectures des informations de désignation codées Ci et d'état fonctionnel Fi de chacun des postes Pi pour constituer une séquence d'étapes réellement effectuées par l'opérateur exécutant. La centrale de contrôle et de gestion 2 est susceptible d'effectuer une comparaison entre la séquence de référence et la séquence d'étapes réellement effectuées mémorisées dans le système témoin 3.

Dans le cas ou l'opérateur est un individu, le système témoin 3 est constitué par un système du type crayon optique, lequel comporte des moyens d'affichage 31 permettant l'affichage en clair de la référence d'identification de chaque poste Pi et de son état fonctionnel. En outre, dans ce cas, un poste d'écriture, lecture du témoin 3 ou système de type crayon optique peut être constitué de façon à former un périphérique supplémentaire du microordinateur 20. Sur la figure 2, ce poste d'écriture est référencé 21.

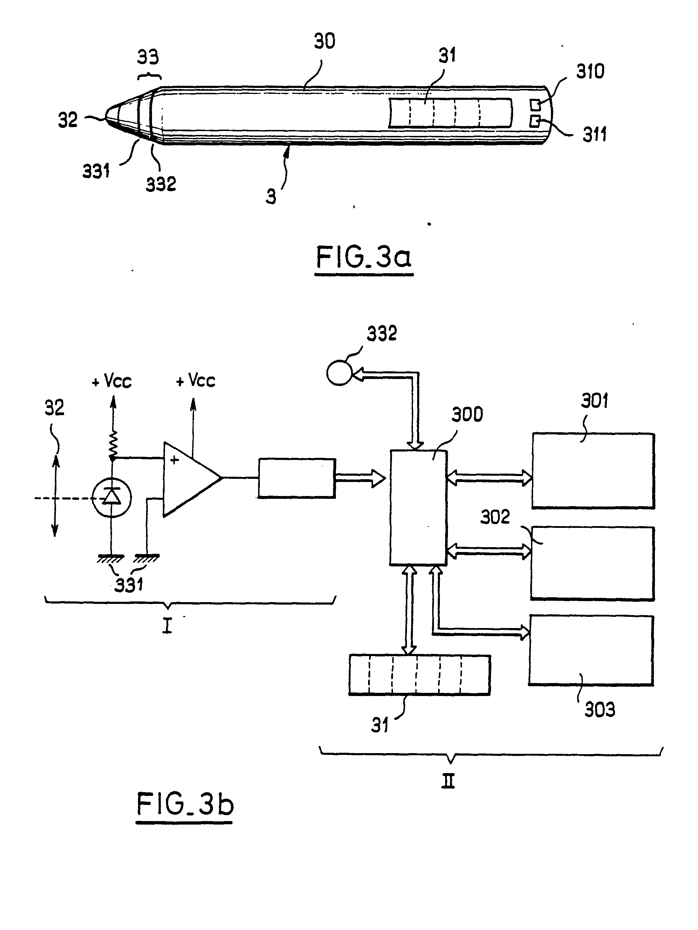

Le système témoin de surveillance 3 sera maintenant décrit au moyen des figures 3a et 3b. De manière avantageuse, ainsi que représenté en figure 3a, le système témoin 3, lorsque l'opérateur est un individu, peut être constitué par un système du type crayon optique comportant des moyens d'affichage en vue de permettre l'affichage en clair de la référence d'identification Ci de chaque poste Pi et de l'état fonctionnel Fi de celui-ci. Le système de type crayon optique présente l'avantage d'une forme parfaitement adaptée à la fonction nouvelle de celui-ci dans l'application au procédé de l'invention. En effet, le crayon optique tel que représente en figure 3a permet à la fois la lecture des références d'identification codées Ci et des références d'état fonctionnel Fi de chaque poste Pi, la mémorisation de ces informations au niveau du système de type crayon optique, de façon à constituer une séquence de référence, la mémorisation des références d'identification Ci et de références d'état fonctionnel Fi de chacun des postes Pi sur lesquels une intervention est effectivement réalisée par l'opérateur exécutant en vue de constituer la séquence d'opérations effectivement réalisée, la gestion de la séquence d'opérations effectivement réalisée par comparaison ces références d'identification Ci et d'état fonctionnel Fi localisées au niveau de chacun des postes avec la séquence de référence, la signalisation à l'opérateur exécutant de la validation ou de la non validation d'une intervention à exécuter sur le site de chacun des postes Pi par une comparaison des références d'identification du postes Ci, Fi avec les étapes de la séquence de référence correspondante.

Ainsi que représenté en figure 3a, la système du type crayon optique 3 comprend un corps 30 réalisé par exemple en matière moulée à l'extrémité duquel des moyens optiques 32 permettent la lecture des références d'identification codées Ci est d'état fonctionnel Fi de chacun des postes Pi. Ces moyens optiques de lecture sont constitués par un système optique normalement utilisé dans les crayons optiques de type classique et, à ce titre, ne seront pas décrits en détail. Le corps 30 du système de type crayon optique comprend en outre une fenêtre d'affichage 31 dans laquelle des moyens d'affichage conditionnels en clair des informations mémorisées dans le système du type crayon optique sont prévus. En outre, deux voyants de signalisation 310, 311 peuvent être prévus afin de produire pour l'opérateur exécutant des signaux de validation ou de non validation de l'intervention à exécuter. Bien entendu, l'emplacement de la fenêtre d'affichage 31 et des voyants de signalisation 310, 311 sur la figure 3a est donné à titre d'exemple seulement non limitatif. Les voyants 310 et 311 peuvent avoir des couleurs complémentaires différentes et être constitués par des diodes électroluminescentes de couleur différente. En outre, le corps 30 du système du type crayon optique comporte dans sa partie effilée, c'est-à-dire au voisinage des moyens optiques de lecture 32 deux électrodes référencées 331, 332 lesquelles constituent une borne de commande 33. La borne de commande 33 peut bien sûr présenter une forme quelconque pourvu qu'elle consiste en deux éléments conducteurs séparés, l'un étant capable de recevoir une tension électrique de référence, et l'autre étant capable au contraire de recevoir une tension de commande proprement dite. Sur la figure 3a, les électrodes 331 et 332 ont été avantageusement représentées sous forme de bagues centrées sur l'axe longitudinal du corps du système de type crayon optique 30 et espacées d'un intervalle déterminé afin d'assurer leur isolation électrique. Les bagues 331, 332 affleurent la surface de la partie effilée du corps 30 et sont adaptées ainsi qu'il sera décrit ultérieurement dans la description de façon à s'engager convenablement dans le poste de lecture, écriture 21. Le corps 30 du système de type crayon optique comprend et renferme l'ensemble des circuits représente en figure 3b permettant d'assurer des fonctions déjà citées. Sur cette figure, une partie référencée I comporte des moyens optiques 32 et des circuits de détection de code barre représentés de manière symbolique par une photodiode de détection, un amplificateur intermédiaire et un circuit de mise en forme des signaux électriques résultants. Sur cette partie, la référence de tension de l'ensemble du dispositif est notée comme correspondant en fait à la tension de l'électrode 331. Cette partie ne sera pas décrite car elle peut être constituée avantageusement par les circuits normalement utilisés dans les crayons optiques de type classique. En outre, la partie référence II comporte des premiers moyens de mémorisation notés 301, des informations lues selon le code barre et des deuxièmes moyens de mémorisation 302 d'information dites de références, relatives à l'identification du poste Pi et/ou à son état fonctionnel. Des moyens processeurs 300 sont également prévus pour gérer la mémorisation dans les premiers 301 et/ou deuxième 302 moyens de mémorisation de l'information correspondante, soit à l'information lue effectivement préalablement à l'intervention, soit à l'information à lire constituant la séquence de référence. Le processeur 300 reçoit les signaux délivrés par la partie détection I, le signal de commande proprement dit délivré par l'électrode 332 lorsque celui-ci est présent et permet l'affichage des informations d'identification et/ou d'état fonctionnel au niveau du moyen d'affichage et de la fenêtre 31.

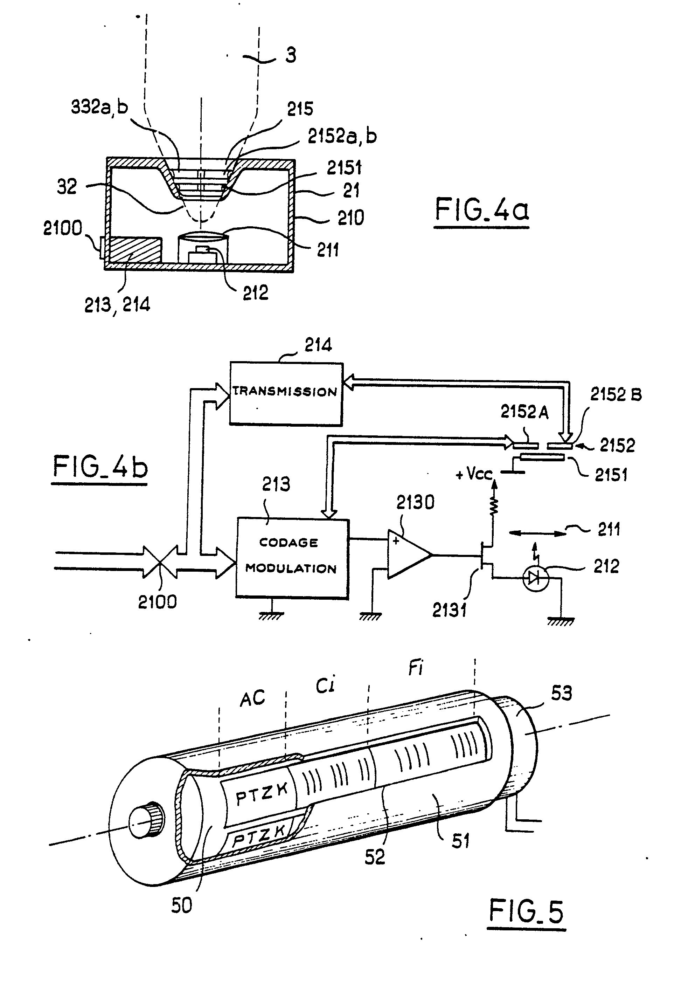

Le poste de lecture écriture 21 sera maintenant décrit au moyen de la figure 4a, laquelle représente une coupe transversale du poste de lecture écriture et de la figure 4b laquelle représente les circuits électriques contenus dans le poste de lecture écriture. Le poste de lecture écriture 21 comprend un châssis 210 en matière moulée par exemple, comprenant à sa partie supérieure un cratère dont la forme est adaptée à la partie effilée du corps 30 du système de type crayon optique de façon que l'introduction de ce dernier dans le cratère permette en position d'appui l'affleurement et l'introduction du système optique 32 à l'intérieur du châssis. Sur la paroi du cratère, sont également prévues des électrodes référencées 2151 et 2152, lesquelles sont spécialement adaptées mécaniquement pour recevoir les électrodes correspondantes 331 et 332 disposées sur la partie effilée du corps 30 du système de type crayon optique. Sur la figure 4a, le cratère destiné à recevoir la partie effilée du corps 30 est référencé 15. A l'intérieur du châssis 210 sont disposés des circuits de codage-modulation 213 permettant une modulation par tout ou rien de l'intensité lumineuse délivrée par une diode électroluminescente 212 et des moyens de focalisation 211. La diode électroluminescente 212 et les moyens de focalisation 211 sont centrés sur l'axe de symétrie du cratère 315. Un port de liaison série 2100 est relié aux circuits de codage-modulation 213. Ainsi que représenté en figure 4b, le circuit de codage-modulation 213 est relié par exemple à un amplificateur intermédiaire 2130 commandant un circuit de commutation 2131, lequel peut être constitué avantageusement par un transistor à effet de champ, et commande la diode électroluminescente 212 par tout ou rien. En outre le circuit de codage-modulation est relié aux électrodes 2152 et 2151, l'électrode 2151 étant par exemple reliée à la tension de référence du dispositif et l'électrode 2152 recevant du circuit de codage-modulation 213 une tension au niveau TTL constituant la tension de commande proprement dite appliquée sur la borne 33 du système de type crayon optique lors de l'utilisation de celui-ci pour la définition de la séquence dite de référence. A titre d'exemple non limitatif, et de manière avantageuse, le circuit de codage-modulation 213 peut être constitué par le circuit de codage modulation utilisé dans les appareils disponibles dans le commerce tels que les imprimantes de code à barre, ce circuit, délivrant les impulsions de modulation correspondante à la diode électroluminescente 212.

Une description plus détaillée du fonctionnement du système de crayon optique 3 et du poste de lecture écriture 21 sera maintenant décrite. Pour la définition et la constitution de la séquence de référence, le système de type crayon optique 3 est placé ainsi que représenté en figure 4a dans la cratère 315 du poste de lecture écriture 21. Ce dernier, est relié au micro-ordinateur par l'intermédiaire du port 2100 qui reçoit du microordinateur sous forme de signaux électriques codés les étapes formées par les informations d'identification Ci et/ou d'état fonctionnel Ni correspondant à chaque poste Pi, sur lequel une intervention doit être effectuée par l'opérateur exécutant. Le circuit de codage modulation 213 délivre la tension de commande à l'électrode 2152 et à l'électrode 332 en contact avec celle-ci du corps 30 du système de type crayon optique 3. Le processeur de gestion 300 sous l'influence de la tension de commande délivrée par l'électrode 332 assure l'aiguillage des informations correspondantes et la mémorisation dans les deuxièmes moyens de mémorisation 302 afin de constituer, dans le témoin 3, la séquence de référence. La séquence de référence est engrendrée par modulation de la diode électroluminescente 212 par circuit de codage-modulation 213, détectée par la partie I des circuits internes au système de crayon optique 30 de enregistrée dans la mémoire 302.

Lors de l'exécuton des interventions sur les postes Pi de l'installation, le témoin ou système de type crayon optique 3, désolidarisé du poste de lecture écriture 21, permet en l'absence de la tension de commande sur l'électrode 332 la lecture des informations d'identifications Ci et/ou d'état fonctionnel Fi localisées géographiquement au niveau de chacun des postes Pi. Pour chacun des postes, l'information correspondante est mémorisée dans les moyens de mémorisation ou mémoire 301, comparée séquentiellement à l'étape correspondante de la séquence de référence mémorisée en 302 par l'intermédiaire du processeur de gestion 300 et un ordre de validation ou de non validation est engendré consistant en l'illumination d'un des voyants 310, 311 et en l'affichage en clair de la désignation du poste Pi correspondant au niveau de la fenêtre d'affichage 31. L'opérateur exécutant en fonction de la couleur du voyant illuminé correspondant à la validation de l'ordre d'exécution peut alors exécuter l'intervention programmée, laquelle elle-même peut être affichée en clair au niveau de la fenêtre d'affichage 31. A titre d'exemple non limitatif, les moyens 301 et 302 peuvent être constitués par des mémoires de type adressable d'une capacité de 8 K-octet, les moyens d'affichage 31 peuvent être constitués par exemple par un affichage à cristaux liquides. Une mémoire permanente de type ROM est prévue et référence 303 de façon à permettre l'affichage en clair des informations précitées au niveau de la fenêtre d'affichage 31 à partir d'une table de conversion entre les informations codées et les informations représentées en clair par exemple selon une représentation alphanumérique.

A la fin des opérations d'intervention, l'opérateur-exécutant remet le système de type crayon optique 3 à la personne responsable de la surveillance gestion pour contrôle de la séquence effectivement réalisée, lequel est effectué comme suit: le système de type crayon optique est à nouveau placé en position dans le cratère 215 du poste de-lecture écriture 21 ainsi que représenté en figure 4a. On notera que, de manière avantageuse, l'électrode 2152 et l'électrode correspondante 332 sont en fait divisées en au moins deux secteurs homologues, 2152a, 2152b, 332a, 332b. Le secteur 2152b par exemple des moyens de lecture écriture 21 est relié par une connexion de type bus à un circuit de lecture transmission 214, lequel est lui-même connecté directement au port 2100. Bien entendu, le cratère et la partie effilée du corps 30 du système de type crayon optique sont munis d'une nervure de détrompage ou de tout moyen équivalent. Après mise en place du système de type crayon optique 3 précité, le responsable peut choisir la lecture des moyens de mémoire 301 dans lesquels la séquence d'opération réellement effectuée par l'opérateur exécutant a été mise en mémoire. Ce choix est commandé à partir du micro-ordinateur, lequel par exemple permet d'engendrer une tension de niveau intermédiaire au niveau TTL sur l'électrode 2152a, laquelle est transmise par l'électrode 332a et détectée par le processeur 300. Le processeur 300 engendre alors l'ordre de lecture de la séquence mémorisée dans la mémoire 301 et la transmission des bits d'information correspondante par l'intermédiaire de l'électrode 2152b et d'un circuit tampon intermédiaire de transmission 214 dans la mémoire centrale du micro-ordinateur. Le contrôle de la séquence effectivement réalisé poste par poste est effectué avec les étapes correspondantes de la séquence de référence préalablement sauvegardées par les mémoires de masse du micro-ordinateur.

Une description complète des moyens d'affichage d'identification et d'état fonctionnel des postes Pi notés M$_l$ sur la figure 2 sera maintenant donnée en liaison avec la figure 5.

Ces moyens sont de préférence constitués par un dispositif comportant au moins une première zone d'affichage de l'identification du poste Pi sous forme codée selon le code barre et une deuxième zone d'affichage de l'état fonctionnel du poste codé selon un même code ou éventuellement un code différent. Ces zones sont notées Ci et Fi. La première zone d'affichage d'identification de poste est constituée par une vignette sur laquelle le code barre est imprimé. La deuxième zone d'affichage est constituée par des éléments à affichage commandé directement par l'état fonctionnel du poste. Bien entendu, une zone d'affichage clair notée Ac peut être ajoutée au voisinage de la zone d'affichage d'identification codée relative au poste Pi. De préférence, ainsi que représenté à la figure 5, les éléments d'affichage sont constitués par un cylindre 50 mobile en rotation dont la surface latérale est divisée en au moins deux surfaces élémentaires délimitées par deux génératrices du cylindre. En outre, dans le cas d'un poste Pi à plusieurs états fonctionnels, le cylindre comprend un nombre de surfaces élémentaires formant bandes égal au nombre d'états fonctionnels du poste. Chaque bande est subdivisée en zones sur lesquelles sont portées les informations codées à afficher ou les informations en clair. Le dispositif d'affichage comporte un corps 51 entourant le cylindre 50 et muni d'une fenêtre 52 laissant apparaître au moins une bande formant surface égale. L'entraînement de l'affichage, c'est-à-dire la commande directe par l'état fonctionnel du poste est assurée à partir d'un moteur pas à pas 53 directement commandé par les moyens de commande du poste Pi correspondant.

Dans la description précédente du système de type crayon optique 3 et du poste de lecture écriture 21, la forme des électrodes 332a et b respectivement 2152a et b a été donnée seulement à titre d'exemple, toute forme ou configuration différente d'électrodes ne sortant pas du cadre de la présente invention. De même, le mode d'inscription de la séquence de référence dans la mémoire 302 des circuits du système de type crayon optique 3, ainsi que la lecture de la séquence effectivement réalisée par l'opérateur-exécutant et mémorisée dans la mémoire 301 sont donnés à titre d'exemple non limitatif, tout mode de réalisation dans lequel la transition des informations données Ci, Fi pour l'inscription de la séquence de référence et pour la lecture de la séquence effectivement réalisée par l'opérateur exécutant est effectuée par voie de signaux uniquement électriques, le système de type crayon optique 3 et le poste de lecture écriture 21 étant alors munis de moyens de connexion série supplémentaires tels qu'une prise RS232C, ne sort pas du cadre de la présente invention. Dans ce dernier cas, la partie détection optique des signaux code barre est réservée pour la seule utilisation du système de type crayon optique lors de la lecture des informations codées d'identification et d'état fonctionnel géographiquement localisées au niveau de chaque poste Pi.

Le système de type crayon optique 3 et le poste de lecture écriture 21 précédemment décrits permet avantageusement de réduire ou de supprimer le risque de transmission erroné des références d'identification et/ou d'état fonctionnel des postes Pi sur lesquels les interventions doivent être effectuées par l'opérateur exécutant, les références de désignation et/ou d'état fonctionnel précité étant supposées avoir été convenablement définies par la personne responsable de l'ensemble des programmes de surveillance/gestion de l'installation.

Cependant, le procédé et le système du dispositif objet de l'invention permettant en outre, de manière tout à fait remarquable, de réduire et dans une certaine mesure de supprimer les erreurs de désignation des postes Pi sur lesquels le programme de surveillance doit être exécuté, la définition de la séquence de référence par la personne responsable précitée pouvant, ainsi qu'il sera décrit ci-après, être réalisée de manière quasi automatique, c'est-à-dire de manière à réduire au minimum l'intervention de la personne responsable pour la définition de la séquence précitée au niveau du système de type crayon optique 3.

Dans ce but, la mémorisation des informations de la séquence de référence dans les deuxièmes moyens de mémorisation 302 du témoin est effectuée au moyen d'une séquence d'opérations gérées par un programme du type "menu" chargé en mémoire centrale du micro-ordinateur 20.

Ce programme comporte, notamment, la définition des opérations de mise en place du témoin ou système de type crayon optique 3 dans le poste de lecture écriture 21 ou poste de chargement constituant un des périphériques du micro-ordinateur. Puis un appel et un affichage sur le moniteur vidéo du micro-ordinateur d'un schéma synoptique représentatif d'au moins une partie de l'installation industrielle est effectuée, schéma sur lequel les postes Pi à surveiller ou à gérer sont représentés par des logos et/ou symboles mnémoniques. La position en X, Y de chacun des symboles représentatifs des postes Pi sur l'écran vidéo est représentative de la référence d'identification codée de chacun des postes Pi et de son état fonctionnel. Bien entendu, une table de correspondance mémorisée dans les mémoires de masse du micro-ordinateur permet, pour chacun des plans synoptiques, d'établir une correspondance entre un poste Pi repéré en X, Y sur le plan considéré, sa référence d'identification Ci et/ou son état fonctionnel Fi. Le même programme permet ensuite sur incitation affichée sur l'écran du moniteur vidéo, à la personne responsable effectuant la définition de la séquence de référence, de réaliser une désignation directe de la référence d'identification codée et/ou d'état fonctionnel du poste Pi à mémoriser dans les deuxièmes moyens mémoire 302 du système de type crayon optique 3. Cette désignation peut de manière avantageuse être effectuée par la personne responsable par pointage mécanique ou optique en XY sur l'écran du moniteur vidéo d'affichage sur le symbole mnémonique ou logo considéré. Dans le cas d'un pointage mécanique, l'écran du moniteur vidéo du micro-ordinateur est pourvu d'un écran de type écran tactile. Dans le cas d'un pointage optique, celui-ci est directement effectué sur l'écran du moniteur vidéo précité, au moyen d'un crayon optique de type classique. Ce type d'appareillage ne sera pas décrit en détail car il constitue un périphérique couramment utilisé dans la technique de la micro-informatique et ses fonctions sont parfaitement connues de l'homme de métier. Bien entendu, tout type d'appareillage capable d'effectuer un pointage en X, Y tel que par exemple un appareillage du type "souris" peut également être utilisé.

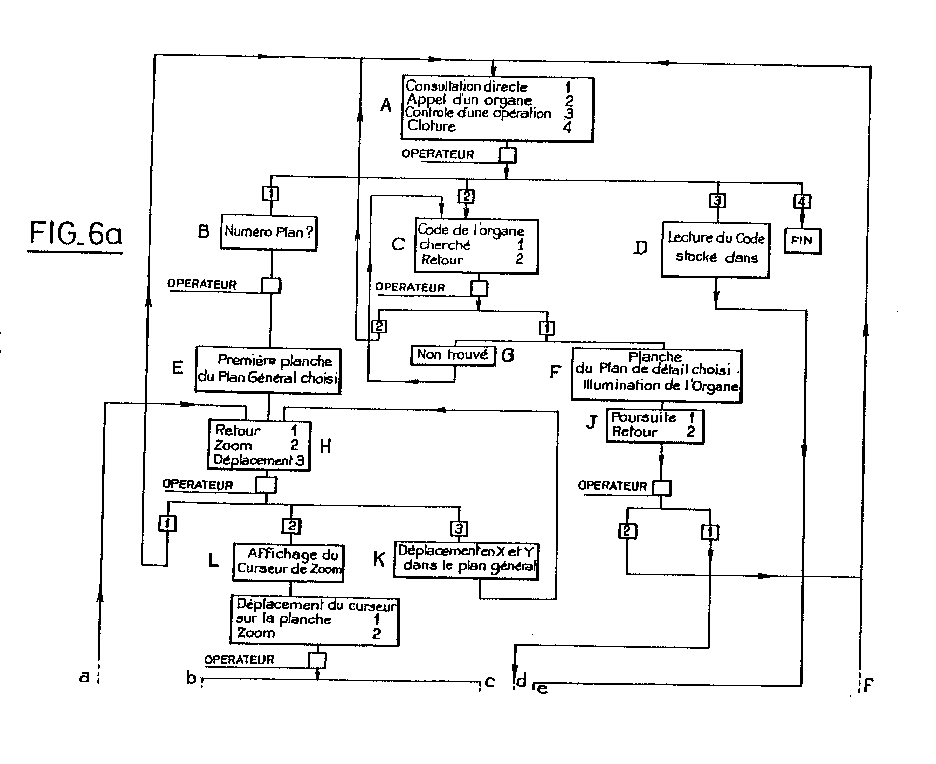

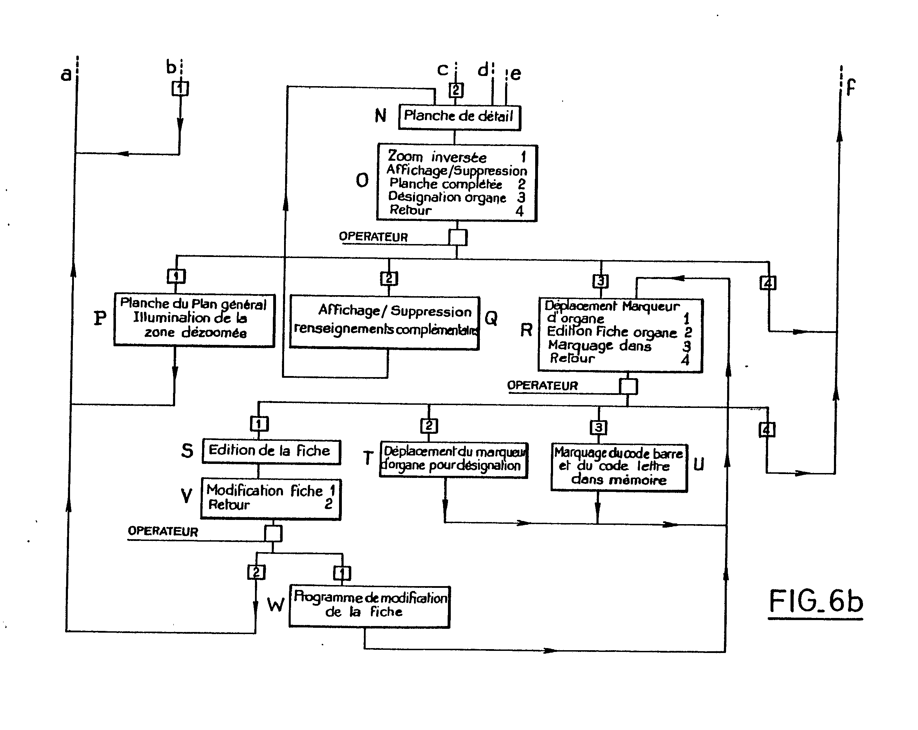

Une description d'un type de programme de type "menu" particulièrement bien adapté à la fonction de surveillance et/ou de gestion d'une installation industrielle grâce auquel les erreurs de retranscription de la séquence dite de référence peuvent être sensiblement réduites ou même supprimées, sera maintenant données à l'aide de l'organigramme représenté en figure 6.

La personne responsable du programme de surveillance et/ou de gestion de l'installation considérée ou de la maintenance d'une unité particulière de cette installation se voit présenter, à la mise en route du logiciel correspondant à l'organigramme précité, un "menu" (A) lui proposant:

—une consultation directe des plans de l'unité ou installation à surveiller, ces plans étant stockés dans la mémoire de masse de l'ordinateur 20; la commande 1 branche alors le programme en (B), (voir paragraphe "a", Consulation directe).

—l'appel d'un poste Pi ou organe par son nom de code (un surveillant ou opérateur exécutant venant de signaler une anomalie sur un poste ou organe dont il a repéré le nom de code au cours d'une visite de l'installation; la commande 2 branche alors le programme en (C), (voir paragraphe "b", Recherchie d'un organe par appel de son nom de code).

—le contrôle d'une action effectuée sur le site de l'installation par un opérateur exécutant, à l'aide du système objet de l'invention et conformément au procédé définissant celle-ci; la commande 3 branche alors le programme en (D) (voir paragraphe "c" Controle d'une operation avec le système objet de l'invention).

—enfin, la clôture du programme.

a) Consulation directe:

Le numéro de référence du plan à consulter est demandé en (B) et la première planche du plan en général correspondant est affichée en (E).

La personne responsable peut alors en (E) effectuer l'une des trois opérations suivantes:

—revenir au "menu" général (A) (commande 1),

—effectuer un effet dit effet de zoom fur la zone du plan en général présenté (commande 2 qui branche le programme en (L)).

—se déplacer sur la plan en général pour trouver la zone de ce plan ou un zoom sera effectué (commande 3 qui branche le programme en (K)).

Le déplacement dans le plan en général est effectué par la commande (K) et le programme est rebranché en (H) pour un nouveau choix de la personne responsable.

Si la commande de zoom a été appelée (commande 2 de (E)), le curseur de l'effet de zoom, lequel peut par exemple consister en une plage colorée se superposant sur la partie de plan général à agrandir, est affiché en (L). La personne responsable peut, soit déplacer le curseur d'effet de zoom sur la planche du plan en général pour désigner la zone à agrandir (commande 1 de (M)), soit commander l'effet de zoom (commande 2 de (M)).

Le zoom ayant été commandé, la planche de détail engendrée par l'effet de zoom est affichée en (N) et un nouveau "menu" est proposé en (O). La personne responsable peut alors:

—commander un effet de zoom inverse pour revenir à la planche en général (commande 1 de (O) qui branche le programme en (P) où le plan général est affiché avec illumination de la partie correspondant au précédent plan de détail; le programme est alors rebranché en (H) pour une nouvelle recherche).

—afficher des renseignements complémentaires sur la planche de détail. Ces renseignements ne sont fournis qu'à la demande de la personne responsable pour ne pas surchrger inutilement le schéma pendant les opérations d'identification des zones intéressantes (commande 2 de (O) qui branche en (Q), pour l'affichage, puis en (N), pour la continuation, des opérations d'identification).

—désigner un poste Pi ou un organe à l'aide du crayon optique de type classique, d'une "souris" ou analogue, ainsi que déjà cité, (commande 3 de (O) branchant le programme en (R)).

—retourner au "menu" principal (commande 4).

La commande (3) de désignation de poste Pi ou d'organe ayant été sélectionné, le programme est branché sur (R). La personne responsable peut alors:

déplacer le marqueur pour désigner l'organe ou poste Pi désiré (commande 1).

—éditer les fiches stockées dans la mémoire de masse, correspondant au poste Pi ou organe, désigné (commande 2) pour consultation (S) ou modification (V et W).

—mettre en mémoire dans le système objet de l'invention le numéro de code du poste Pi ou organe désigné, son code barre et si nécessaire des renseignements complémentaires concernant l'opération Fi à exécuter sur le poste ou organe Pi désigné (commande 3 qui branche sur l'opération (U)).

Cette opération de désignation directe par identification d'un organe ou poste Pi sur le plan sans avoir à retranscrire un numéro de code lu sur un document constitue avantageusement un moyen conformément à l'invention, permettant d'éviter ainsi des erreurs de recopiage ou des erreurs d'identification de nom d'un organe ou poste Pi sur lequel une intervention d'exécution de changement d'état fonctionnel Fi ou de simple surveillance, constatation que la fonction correspond bien à celle attendue, doit être effectuée.

En général, cette opération de désignation par recherche directe des organes ou poste Pi à partir du plan général, est le plus souvent effectuée par appel du nom de code de celui-ci. Bien entendu cette possibilité sera décrite au paragraphe ci-après.

b) Recherche d'un organe par appel de son nom de code:

La commande (2 de (A) ayant été sélectionnée, le programme est ranché en (C) ou le nom de code est entré directement dans la mémoire centrale du micro-ordinateur 20, par frappe au clavier par exemple.

Si ce nom de code ne correspond à aucun organe ou poste Pi existant, le programme est branché en (G) pour retour au "menu" principal (A).

Si l'organe est identifié, la planche de détail où se situe l'organne cherché est affichée et l'organe est désigné par un marqueur clignotant par exemple.

L'opérateur peut alors soit revenir au "menu" principal (commande 2 de (J)), soit poursuivre l'étude du schéma (commande 1 de (J)). Le programme est alors branché en (N) et les opérations se pour-suivent commen décrites précédemment.

Cette méthode est avantageusement utilisée pour identifier rapidement la zone de plan où se situe un organe repéré commen défaillant par un opérateur exécutant ou surveillant afin de préparer les manoeuvres de dépannage en agissant sur les organes voisins. Ce sont donc les codes d'identification Ci et/ou d'état fonctionnel Fi des organes voisins qui seront stockés dans la mémoire du système objet de l'invention, suivant la méthode décrite en (a).

c) Controle d'une operation effectuée avec le système conformement au procedé de l'invention

Un surveillant ou opérateur exécutant ayant effectué une série d'opérations sur divers postes ou organes Pi en suivant les instructions stockées dans la mémoire 301 du système de type crayon optique 3 précédemment décrit, place celui-ci dans le poste de lecture/écriture 21. La commande (3) de (A) provoque alors la lecture des codes stockés dans la mémoire 302 du système de type crayon optique (3), vérifie que les lectures sur le site de l'installation ont toutes été effectuées dans l'ordre prescrit (D) et, par un processus analogue à celui décrit en (b), désigne directement les organes ou poste Pi correspondants sur la planche de détail en (N). La personne responsable peut alors en particulier, renseigner et actualiser les fiches correspondantes (opérations) (S), (V, W).

Ainsi sont évitées les erreurs de transcriptions de nom de code, ce qui évite de renseigner on actualiser une fiche correspondant à un autre organne que l'organne qui vient de faire l'objet d'une opération ou intervention.

Le procédé et le système objet de l'invention trouvent avantageusement application à des installations de tout type d'industrie.

**Revendications**

1. Procédé de surveillance et de gestion d'une installation industrielle comportant une pluralité de postes (Pi) capables d'occuper chacun au moins deux états fonctionnels distincts, dans lequel la surveillance est normalement effectuée par un opérateur susceptible, après contrôle de l'état fonctionnel de chacun des postes (Pi), d'assurer le changement d'état fonctionnel dudit poste (Pi), caractérisé en ce que ledit procédé consiste:

a) à attribuer à chaque poste (Pi) une référence d'identification codée et une information d'état fonctionnel;

b) à définir, préalablement à toute opération sur lesdits postes (Pi) au niveau d'une centrale de contrôle et de gestion, une succession temporelle des interventions sur chacun des postes par l'opérateur pour établir une séquence de surveillance/gestion correspondante dite de référence, chaque intervention et la référence d'identification du poste (Pi) correspondant constituant une étape;

c) à mémoriser au niveau d'un système témoin de surveillance ladite séquence relative à chaque poste (Pi);

d) l'identification d'un poste (Pi) sur laquelle une opération doit être effectuée étant actualisée et/ou affichée en clair au niveau dudit témoin, à effectuer une comparaison entre l'information d'identification codée attribuée au poste (Pi) considéré avec l'information mémorisée au niveau du témoin de surveillance pour établir à partir dudit témoin de surveillance, un ordre de réalisation ou validation d'opération;

e) ladite validation étant acquise, à mémoriser l'étape de séquence effectuée et à actualiser et/ou à afficher sur le témoin, l'information d'identification du poste suivant (Pi+1) sur lequel une opération de surveillance/gestion doit être effectuée;

f) à répéter les étapes d) et e) précédentes pour l'ensemble des postes (Pi) selon ladite séquence.

2. Procédé selon la revendication 1, caractérisé en ce que, dans le cas où l'opérateur est un individu, lesdites références d'identification codées et d'information d'état fonctionnel attribuées à chaque poste (Pi) sont géographiquement localisées au niveau de chaque poste (Pi), lesdites informations d'identification étant codées sous forme de code barre et le système témoin étant constitué par un système du type crayon optique muni d'un système d'affichage.

3. Procédé selon l'une des revendications précédentes, caractérisé en ce que suite à l'opération de surveillance/gestion effectuée sur le dernier poste (Pi), une comparaison entre la suite d'étapes de séquence mémorisées et la séquence de référence est effectuée pour contrôle au niveau de la centrale de contrôle et de gestion.

4. Système de surveillance et de gestion d'une installation industrielle comportant une pluralité de postes (Pi) capables d'occuper chacun au moins deux états fonctionnels distincts, dans lequel la surveillance est normalement effectuée par un opérateur susceptible, après contrôle de l'état fonctionnel de chacun des postes (Pi), d'assurer le changement d'état fonctionnel dudit poste (Pi) caractérisé en ce que ledit système comporte:

—des moyens d'identification (Mi) de chacun des postes (Pi) mettant en oeuvre une référence d'identification exprimée en code et/ou en clair,

—une centrale de contrôle et de gestion (2) permettant de définir à partir des références d'identification de chacun des postes (Pi) et préalablement à toute opération sur lesdits postes une succession temporelle des interventions sur chacun des postes par l'opérateur pour établir une séquence de surveillance/gestion correspondante dite de référence, chaque intervention et la référence d'identification du poste (Pi) correspondant constituant une étape de ladite séquence,

—un système témoin (3) susceptible de mémoriser ladite séquence de référence et d'effectuer une lecture/mémorisation séquentielle de ladite référence d'identification codée de chacun des postes (Pi), ledit système témoin après lecture/mémorisation de ladite référence d'un poste (Pi) étant adapté à engrendrer un ordre de validation pour l'opérateur puis à actualiser ou afficher sur le système témoin l'information d'identification du poste suivant (Pi+1) sur lequel une opération de surveillance/gestion doit être effectuée, ledit système témoin étant en outre adapté à mémoriser l'ensemble des lectures de chacun des postes

(Pi) pour constituer une séquence d'étapes réellement effectuées et la centrale de contrôle et de gestion étant susceptible d'effectuer une comparaison entre la séquence de référence et la séquence d'étapes effectuées.

5. Système selon la revendication 4, caractérisé en ce que la centrale de contrôle et de gestion (2) est un microordinateur muni de des périphériques.

6. Système selon l'une des revendications 4 ou 5, caractérisé en ce que, l'opérateur étant un individu, ledit système témoin est constitué par un système du type crayon optique (3), ledit crayon optique comportant des moyens d'affichage permettant l'affichage en clair de la référence d'identification de chaque poste Pi.

7. Système selon la revendication 6, caractérisé en ce que le système du type crayon optique comprend:

—des moyens optiques (32) de lecture du code barre,

—des premiers moyens de mémorisation (301) des informations lues selon le code barre,

—des deuxièmes moyens de mémorisation (302) d'informations, dites de référence, relatives à l'identification du poste Pi et/ou à son état fonctionnel,

—des moyens processeurs (300) pour gérer la mémorisation dans lesdits premiers et deuxièmes moyens de mémorisation et pour assurer une comparaison entre l'information mémorisée dans les premiers et deuxièmes moyens de mémorisation,

—des moyens d'affichage conditionnel en clair de l'information lue dans les premiers et/ou dans les deuxièmes moyens de mémorisation et correspondant à l'information lue effectivement ou à l'information à lire.

8. Système selon la revendication 7, caractérisé en ce que le système du type crayon optique comprend:

une borne de connexion extérieure (33) destinée à recevoir un signal de commande autorisant le chargement dans lesdits deuxièmes moyens de mémorisation des informations dites de référence aptes à constituer ladite succession temporelle des interventions sur chacun des postes (Pi) de surveillance de gestion de référence.

9. Système selon l'une des revendications 4 à 8, précédentes, caractérisé en ce que la centrale de contrôle et de gestion étant un microordinateur muni de son moniteur d'affichage vidéo le mémorisation desdites informations, dites de référence, dans les deuxièmes moyens de mémorisation du témoin de type crayon optique est effectuée au moyen d'une séquence d'opérations gérées par un programme du type "menu" comportant notamment les opérations de:

—mise en place dudit témoin dans un poste de chargement constituant l'un des périphériques dudit microordinateur,

—appel et affichage sur le moniteur vidéo d'un schéma synoptique représentatif d'au moins une partie de l'installation industrielle sur lequel lesdits postes (Pi) à surveiller ou à gérer sont représentés par des logos et symboles mnémoniques, la position en X, Y de chacun des symboles représentatifs des postes Pi sur l'écran étant représentative de la référence d'identification codée de chacun des postes (Pi),

—désignation directe de la référence d'identification codée à mémoriser par pointage mécanique ou optique en X, Y sur l'écran du moniteur d'affichage dudit symbole mnémonique ou logo et chargement dans lesdits deuxièmes moyens de mémorisation de la référence codée correspondante.

10. Dispositif d'affichage d'identification et d'état fonctionnel d'un poste d'installation industrielle, caractérisé en ce qu'il comporte au moins:

—une première zone (Ci) d'affichage de l'identification dudit poste sous forme codée selon le code barre,

—une deuxième zone (Fi) d'affichage de l'état fonctionnel dudit poste sous forme codée selon un même code ou un code différent, et caractérisé en ce que au moins la deuxième zone (Fi) d'affichage est constituée par des éléments à affichage commandé directement par l'état fonctionnel du poste.

11. Dispositif selon la revendication 10, caractérisé en ce que ladite première zone (Ci) d'affichage de l'identification du poste est constituée par une vignette sur laquelle le code barre est imprimé.

12. Dispositif selon la revendication 10, caractérisé en ce que les éléments à affichage sont constitués par un cylindre mobile (50) en rotation dont la surface latérale est divisée en au moins deux surfaces élémentaires délimitées par deux génératrices dudit cylindre.

13. Dispositif selon la revendication 13, caractérisé en ce que dans le cas d'un poste à plusieurs états fonctionnels, ledit cylindre comprend un nombre de surfaces élémentaires formant bandes égal au nombre d'états fonctionnels du poste, chaque bande étant subdivisée en zones sur lesquelles sont portées les informations codées à afficher.

**Patentansprüche**

1. Verfahren zur Überwachung und zum Betreiben einer Industrieanlage mit einer Mehrzahl von Posten (Pi), die geeignet sind, wenigstens zwei verschiedene Zustände einzunehmen, in welchem Verfahren die Überwachung normalerweise von einem Operateur durchgeführt wird, der geeignet ist, nach der Kontrolle des Funktionszustandes jedes der Posten (Pi) die Änderung des Funtionszustandes der Postens (Pi) sicherzustellen, dadurch gekennzeichnet, daß das Verfahren besteht aus:

a) der Zuteilung für jeden Posten einer kodierten Identifikationsreferenz und einer Information über den Funktionszustand;

b) der Festlegung vor jeder Operation auf den Posten (Pi) auf der Ebene einer Kontroll- und Betriebszentrale eines Zeitablaufs der Eingriffe an jedem der Posten durch den Operateur, um eine entsprechende Referenzsequenz bezeichnete Überwachungs-/Betriebssequenz festzulegen, wobei jeder Eingriff und die Identifikationsreferenz des entsprechenden Posten (Pi) eine Etappe darstellen;

c) dem Speichern auf der Ebene eines Überwachungskontrollsystems der auf jeden Posten (Pi) bezogenen Sequenz;

d) der Durchführung eines Vergleichs, nachdem die Identifizierung eines Posten (Pi), auf dem eine Operation durchgeführt werden soll, aktualisiert und/oder in Klarschrift auf der Ebene des Kontrollsystems angezeigt worden ist, zwischen der kodierten, dem fraglichen Posten (Pi) zugeteilten Information und der auf der Ebene des Überwachungskontrollsystems gespeicherten Information, um ausgehend von dem Überwachungskontrollsystems eine Operationsdurchführungsordnung oder -gültigkeitsordnung festzulegen;

e) dem Speichern nach der Annahme der Gültigkeit der durchgeführten Sequenz und der Aktualisierung und/oder dem Anzeigen auf dem Kontrollsystem der Identifikationsinformation des folgenden Posten (Pi+1), auf dem eine Überwachungs-/Betriebsoperation erfolgen soll;

f) dem Wiederholen der vorhergehenden Etappen d) und e) für die Gesamtheit der Posten entsprechend der Sequenz.

2. Verfahren nach Anspruch 1, dadurch gekennzeichnet, daß für den Fall, daß der Operateur ein Individuum ist, die kodierten Identifikationsreferenzen und die Information über den Funktionszustand, die jedem Posten (Pi) zugeordnet sind, sich geographisch auf der Höhe jedes Postens befinden, wobei die Identifikationsinformationen in der Form von Strichkodes kodiert sind und das Kontrollsystem aus einem mit einem Anzeigesystem versehenen optischen Stiftsystem besteht.

3. Verfahren nach einem der vorhergehenden Ansprüche, dadurch gekennzeichnet, daß anschließend an die auf dem letzten Posten (Pi) durchgeführte Überwachungs-/Betriebsoperation ein Vergleich zwischen der Folge der gespeicherten Etappen der Sequenz und der Referenzsequenz zur Kontrolle auf der Höhe der Kontroll- und Betriebszentrale durchgeführt wird.

4. System zur Überwachung und zum Betreiben einer Industrieanlage mit einer Mehrzahl von Posten (Pi), die geeignet sind, wenigstens zwei verschiedene Zustände einzunehmen, in welchem System die Überwachung normalerweise von einem Operateur durchgeführt wird, der geeignet ist, nach der Kontrolle des Funktionszustands jede der Stellen (Pi) die Änderung des Funktionszustandes der Stelle (Pi- sicherzustellen, dadurch gekennzeichnet, daß das System aufweist:

—eine Identifikationsvorrichtung (Mi) für jeden Posten (Pi), die eine in Kode und/oder in Klarschrift ausgedrückte Identifikationsreferenz verarbeitet;

—eine Kontroll- und Betriebszentrale (2), die ausgehend den Identifikationsreferenzen jedes der Posten (Pi) und vor jeder Operation auf den Posten die Festlegung eines Zeitablaufs der Eingriffe an jedem der Posten durch den Operateur ermöglicht, um eine entsprechende Referenzsequenz bezeichnete Überwachungs/Betriebssequenz festzulegen, wobei jeder Eingriff und die Identifikationsreferenz des entsprechenden Postens (Pi) eine Etappe der Sequenz darstellen;

—ein Kontrollsystem (3), das in der Lage ist, die Referenzsequenz zu speichern und das sequentielle Lesen/Speichern der kodierten Identifikationsreferenz jedes der Posten (Pi) durchzuführen, wobei das Kontrollsystem nach dem Lesen/Speichern der Referenz eines Posten (Pi) geeignet ist, eine Gültigkeitsordnung für den Operateur zu erzeugen und dann auf dem Kontrollsystem die Identifikationsinformation des folgenden Postens (Pi+1), auf dem eine Überwachungs-/Betriebsoperation ausgeführt werden soll, zu aktualisieren oder anzuzeigen, wobei das Kontrollsystem außerdem geeignet ist, die Gesamtheit der Ablesungen jedes Postens (Pi) zu speichern, um eine Sequenz der tatsächlich durchgeführten Etappen zu bilden, und wobei die Kontroll- und Betriebszentrale geeignet ist, einen Vergleich zwischen der Referenzsequenz und der Sequenz der durchgeführten Etappen durchzuführen.

5. System nach Anspruch 4, dadurch gekennzeichnet, daß die Kontroll- und Betriebszentrale (2) ein mit Peripheriegeräten versehener Mikrocomputer ist.

6. System nach einem der Ansprüche 4 oder 5, dadurch gekennzeichnet, daß der Operateur ein Individuum ist und daß das Kontrollsystem aus einem optischen Stiftsystem besteht, wobei der optische Stift eine Anzeigevorrichtung aufweist, die die Anzeige in Klarschrift der Identifikationsreferenz jedes Postens Pi ermöglicht.

7. System nach Anspruch 6, dadurch gekennzeichnet, daß das optische Stiftsystem aufweist:

—eine optische Strichkodelesevorrichtung (32),

—eine erste Vorrichtung (301) zur Speicherung der über den Strichkode eingelesenen Informationen,

—eine zweite Vorrichtung (302) zur Speicherung sogenannter Referenzinformationen über die Identifikation des Postens Pi und/oder über seinen Funktionszustand,

—eine Verarbeitungsvorrichtung (300), um das Speichern in der ersten und zweiten Speichervorrichtung zu betreiben und um einen Vergleich zwischen der in der ersten und der in der zweiten Speichervorrichtung gespeicherten Information sicherzustellen, und

—eine Vorrichtung zur bedingten Klarschriftanzeige der in die erste und/oder zweite Speichervorrichtung eingelesenen Information, die der echt eingelesenen oder zu lesenden Information entspricht.

8. System nach Anspruch 7, dadurch gekennzeichnet, daß das optische Stiftsystem aufweist:

eine äußere Anschlußklemme (33), die bestimmt ist, ein Steuersignal zu empfangen, das das Einlesen von sogenannten Referenzinformationen, die geeignet sind, die zeitliche Abfolge von Eingriffen auf jedem der Referenzbetriebsüberwachungsposten (Pi) zu bilden, in die zweite Speichervorrichtung gestattet.

9. System nach einem der Ansprüche 4 bis 8, dadurch gekennzeichnet, daß die Kontroll- und Betriebszentrale ein mit einem Vodei-Anzeigemonitor versehener Mikrocomputer ist und daß das Speichern der sogenannten Referenzinformationen in die zweite Speichervorrichtung des Kontrollsystem aus einem optischen Stiftsystem mittels eines durch ein Programm des "Menü-"typs ausgeführten Operationsablaufs ausgeführt wird, wobei das Programm insbesondere folgende Operationen aufweist:

—Einsetzen des Kontrollsystems in einen Einleseposten, der eines der Peripheriegeräte des Mikrocomputers darstellt,

—Aufruf und Anzeige auf dem Videomonitor eines synoptischen Schemas, das wenigstens einen Teil der Industrienanlage darstellt und auf dem die zu überwachenden oder zu betreibenden Posten (Pi) durch Logos und mnemonische Symbole dargestellt sind, wobei die X, Y-Position jedes der Symbole, die die Posten Pi auf dem Schirm darstellen, die kodierte Identifikationsreferenz jedes der Posten (Pi) darstellt, und

—die direkte Bestimmung der kodierten und zu speichernden Identifikationsreferenz durch mechanisches oder optisches Markieren der X, Y-Position des mnemonischen Symbols oder Logos auf dem Anzeigeschirm und die Speicherung der entsprechenden kodierten Referenz in der zweiten Speichervorrichtung.

10. Anzeigevorrichtung für die Identifikation und den Funktionszustand eines Posten in einer Industrieanlage, dadurch gekennzeichnet, daß sie wenigstens aufweist:

—einen erste Anzeigebereich (Ci) für die Identifikation des Posten in der Form eines Strichkodes,

—einen zweiten Anzeigebereich (Fi) für den Funktionszustand des Postens in dem gleichen Kode oder in einem unterschiedlichen Kode und dadurch gekennzeichnet, daß wenigstens der zweite Anzeigebereich (Fi) aus Anzeigeelementen besteht, die direkt durch den Funktionszustand des Postens gesteuert werden.

11. Vorrichtung nach Anspruch 10, dadurch gekennzeichnet, daß der erste Anzeigebereich (Ci) des Postens aus einer Vignette besteht, auf die der Strichkode gedruckt ist.

12. Vorrichtung nach Anspruch 10, dadurch gekennzeichnet, daß die Anzeigeelemente aus einem beweglichen, sich drehenden Zylinder (50) bestehen, dessen seitliche Oberfläche in wenigstens zwei durch zwei erzeugende Flächen des Zylinders begrenzte, elementare Oberflächen unterteilt ist.

13. Vorrichtung nach Anspruch 12, dadurch gekennzeichnet, daß im Falle eines Postens mit mehreren Funktionszuständen der Zylinder eine Anzahl von Elementaroberflächen aufweist, die Bänder bilden, die gliech der Anzahl der Funktionszustände des Postens sind, wobei jedes Band in Bereiche unterteilt ist, auf denen die kodierten, anzuzeigenden Information angebracht sind.

## Claims

1. A method of supervision and management of an industrial installation having a plurality of stations (Pi) each able to occupy at least two distinct functional states, in which the supervision is normally carried out by an operator able, after control of the functional state of each of said stations (Pi), to ensure the change of functional state of said station (Pi), wherein said method consists of:—

a) attributing to each said (Pi) a coded identifying reference and a functional state information,

b) defining, preliminarily to any operation on said stations (Pi) at a central console for control and management, a succession in time of operations on each of said stations by the operator for establishing a corresponding sequence of supervision/management called reference, each operation and the identifying reference of said corresponding station (Pi) constituting a stage,

c) memorising at a supervisory witness system said sequence relating to each said station (Pi),

d) the identification of a station (Pi) on which an operation is to be carried out being brought about and/or displayed in the clear at said witness system, effecting a comparison between the coded identifying information attributed to said station Pi under consideration with the information memorised at said supervisory witness system for establishing from said supervisory witness system, an order of performance for validation of the operation,

e) said validation being acquired, memorising said stage of said sequence effected and bringing about and/or displaying on said witness system, the identifying information of the following station (Pi+1) on which an operation of supervision/management is to be carried out,

f) repeating the preceding stages d) and e) for the entirety of said stations (Pi) according to said sequence.

2. A method according to claim 1, wherein, in the case where the operator is an individual, said references of coded identification and functional state information attributed to each said station Pi are geographically positioned at each said station Pi, said identifying informations being coded in bar code form and said witness system being constituted by a system for the light pencil type provided with a display system.

3. A method according to claim 1, wherein following said supervision/management operation carried out on the last station Pi, a comparison between the result of said stages memorised in sequence and said reference sequence is carried out for control at said central console for control and management.

4. A system for supervision and management of an industrial installation having a plurality of stations (Pi) each capable to occupy at least two distinct functional states, in which the supervision is normally carried out by an operator able after control of the functional state of each of said stations (Pi) to ensure the change of functional state of said station (Pi) said system comprising:

means for identification (Mi) of each of said stations (Pi) providing an identifying reference expressed in code and/or in the clear.

a central console (2) for control and management permitting the definition from identifying references of each of said stations (Pi) and preliminarily to any operation on said stations a succession in time of operations on each of said stations by an operator for establishing a corresponding sequence of supervision/management called reference, each said operation and the identifying reference of said corresponding station (Pi) constituting a stage of said sequence,

a supervisory witness system (3) able to memorise said reference sequence and to carry out a sequential reading/memorisation of said coded identifying reference of each of said stations (Pi), said witness system after reading/memorisation of said reference of said station (Pi) being adapted to generate a validation order for the operator then to bring about or display on said witness system the identifying information of the following station (Pi+1) on which an operation of supervision/management is to be carried out, said witness system being further adapted to memorise the entirety of the readings of each of said stations (Pi) for constituting a sequence of stages actually carried out and the central control and management console being able to effect a comparison between the reference sequence and the sequence of stages carried out.

5. A system according to claim 4, wherein said central console (2) for control and management is a microprocessor provided with its peripherals.

6. A system according to claim 4, wherein, the operator being an individual, said witness system is constituted by a system of the light pencil type, said light pencil comprising means for display permitting the display by light of the identifying reference of each said station (Pi).

7. A system according to claim 6, wherein said system of the light pencil type comprises:—

optical means (32) for reading a bare code,

first memory means (301) for information read according to the bare code,

second memory means (302) for information, called reference, relating to the identification of said station Pi and/or its functional state,

processor means (300) for managing the memorisation in said first and second memory means and for ensuring a comparison between the memorised information in said first and second memory means,

means for conditional display by light of the information read into the first and/or second memory means and corresponding to the information effectively read or the information to be read.

8. A system according to claim 7, wherein said system of the light pencil type comprises:—

an external connection terminal (33) intended to receive a control signal authorising the charging into said second memory means of informations called reference able to constitute said succession in time of operations on each of said stations (Pi) for supervision or management for reference.

9. A system according to claim 4, wherein said central console for control and management being a microcomputer provided with its own video display monitor the memorisation of said informations, called reference, in said second memory means of said light display of the light pencil type is carried out by means of a sequence of operations managed by a program of the "menu" type having particularly the operations of:—

placing said witness system in a loading station constituting one of the peripherals of said microcomputer,

call and display on said video monitor of a block diagram representing at least one part of the industrial installation on which said stations (Pi) to be supervised or managed are shown by logos and mnemonic signals, the X, Y position of each of the symbols representative of these stations Pi on the screen being representative of the coded identifying reference of each of said stations (Pi),

direct designation of the coded identifying reference to be memorised by mechanical or optical X.Y pointing on the screen of said display monitor of said mnemonic symbol or logo and loading into said second memory means of the corresponding coded reference.

10. A device for display of identification and functional state of a station of an industrial installation, wherein it comprises at least:—

a first display zone (Ci) for identification of said station in the bare coded form,

a second display zone (Fi) of the functional state of said station in coded form under the same code or a different code, and

characterized in that at least said second display zone (Fi) is constituted by display elements directly controlled by the functional state of said station.

11. A device according to claim 10, wherein said first display zone (Ci) for identification of said station is constituted by a display on which the bare code is printed.

12. A device according to claim 10, wherein said display elements are constituted by a cylinder rotation of which the lateral surface is divided into at least two elemental surfaces delimited by two generatrices of said cylinder.

13. A device according to claim 12, wherein, in the case of a station with several functional states, said cylinder comprises a number of elemental surfaces forming bands equal in number to the functional states of the station, each band being sub-divided into zones on which are carried the coded information to be displayed.

$P_i, (C_i, F_i)$

$P_i+1(C_i+1, F_i+1)$

$(C_i , F_i)$

$(C_i+1 , F_i+1)$

FIG.1a

Centrale de contrôle

$P_1, C_1, F_1$

$P_i, C_i, F_i$

$P_N, C_N, F_N$

FIG.1b

1

FIG. 2

FIG.3a

FIG.3b

EP 0 209 459 B1

FIG.4a

FIG.4b

FIG.5

4

FIG_6a

**A**
| Consultation directe | 1 |
| Appel d'un organe | 2 |
| Controle d'une opération | 3 |
| Cloture | 4 |

OPERATEUR ▢

☐1 ☐2 ☐3 ☐4

**B** | Numéro Plan ? |

**C**
| Code de l'organe | |
| cherché | 1 |
| Retour | 2 |

**D** | Lecture du Code stocké dans |

**FIN**

OPERATEUR ▢

OPERATEUR ▢

☐2 ☐1

| Non trouvé | **G** |

**E** | Première planche du Plan Général choisi |

**F**
| Planche du Plan de détail choisi - Illumination de l'Organe |

**J**
| Poursuite | 1 |
| Retour | 2 |

**H**
| Retour | 1 |
| Zoom | 2 |
| Déplacement | 3 |

OPERATEUR ▢

OPERATEUR ▢

☐1 ☐2 ☐3

☐2 ☐1

**L** | Affichage du Curseur de Zoom |

**K** | Déplacement en X et Y dans le plan général |

| Déplacement du curseur sur la planche | 1 |
| Zoom | 2 |

OPERATEUR ▢

a ¦     b ⌐     c ¦d ⌐e     ¦f

EP 0 209 459 B1

N  Planche de détail

O  Zoom inversée 1
Affichage/Suppression
Planche complétée 2
Désignation organe 3
Retour 4

OPERATEUR

P  Planche du Plan général
Illumination de la
zone dézoomée

Q  Affichage / Suppression
renseignements complémentaires

R  Déplacement Marqueur
d'organe 1
Edition Fiche organe 2
Marquage dans 3
Retour 4

OPERATEUR

S  Edition de la fiche

T  Déplacement du marqueur
d'organe pour désignation

U  Marquage du code barre
et du code lettre
dans mémoire

V  Modification fiche 1
Retour 2

OPERATEUR

W  Programme de modification
de la fiche

FIG_6b

EP 0 209 459 B1